(19) **Europäisches Patentamt European Patent Office Office européen des brevets**

(11) **EP 4 644 838 A1**

(12) **EUROPEAN PATENT APPLICATION**
published in accordance with Art. 153(4) EPC

(43) Date of publication:
**05.11.2025   Bulletin 2025/45**

(21) Application number: **23910248.6**

(22) Date of filing: **19.12.2023**

(51) International Patent Classification (IPC):
***G01C 21/16*** (2006.01)

(52) Cooperative Patent Classification (CPC):
Y02T 10/40

(86) International application number:
**PCT/CN2023/139720**

(87) International publication number:
**WO 2024/140318 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **30.12.2022   CN 202211724857**

(71) Applicant: **Beijing Roborock Innovation Technology Co., Ltd.**
**Beijing 102206 (CN)**

(72) Inventor: **CAI, Weiyan**
**Beijing 102206 (CN)**

(74) Representative: **Cabinet Beau de Loménie**
**103, rue de Grenelle / CS 90800**
**75340 Paris Cedex 07 (FR)**

(54) **POSE ESTIMATION METHOD AND APPARATUS OF MOBILE ROBOT, MOBILE ROBOT AND MEDIUM**

(57)   A pose estimation method and apparatus for a mobile robot, the mobile robot, and a storage medium. The method comprises: obtaining an environment three-dimensional point cloud when a mobile robot executes a planar task, and on the basis of a preset height threshold, determining a working plane point cloud according to the environment three-dimensional point cloud (S110); obtaining inertial measurement information of the mobile robot (S120); and according to the inertial measurement information and the working plane point cloud, determining the pose of the mobile robot in a world coordinate system (S130).

| |
|---|
| Obtaining a three-dimensional point cloud of an environment when the mobile robot performs a planar task, and determining a work plane point cloud based on the three-dimensional point cloud of the environment and a predetermined height threshold — S110 |
| Obtaining inertial measurement information of the mobile robot — S120 |
| Determining a posture of the mobile robot in a world coordinate system based on the inertial measurement information and the work plane point cloud — S130 |

**FIG. 1**

EP 4 644 838 A1

**Description**

**CROSS-REFERENCE TO RELATED APPLICATION**

The present application claims priority to Chinese Patent Application No. 202211724857.9, filed to the Chinese Patent Office on December 30, 2022 and titled "POSTURE ESTIMATION METHOD AND APPARATUS FOR MOBILE ROBOT, MOBILE ROBOT AND MEDIUM", which is incorporated herein by reference in its entirety.

**TECHNICAL FIELD**

The present application relates to the field of robot posture estimation technologies, in particular to a posture estimation method and apparatus for a mobile robot, a mobile robot and a medium.

**BACKGROUND ART**

When a mobile robot performs a task in a plane, the mobile robot attitude angle is usually aligned with the work plane, thus reducing the degrees of freedom of the robot and simplifying the complexity of solving motion problems of the robot. However, in actual scenarios, the robot operation environment may have potholes, doorsills, etc., causing the robot to bump and change its attitude, affecting the robot's sensing on the surrounding obstacles, and resulting in problems such as inaccurate robot positional posture and incorrect obstacle marking.

In the prior art, the attitude detection method for a robot performing a planar task is usually performed by calculating the attitude with the angle value measured by an inertial measurement unit, but the low-cost inertial measurement unit often has a relatively large error value, making it difficult to obtain an accurate attitude of the robot in the work plane.

**SUMMARY OF THE APPLICATION**

In response to the above problem, embodiments of the present application propose a posture estimation method and apparatus for a mobile robot, a mobile robot and a medium. By combining the point cloud data collected by a linear laser and the angle data collected by an inertial measurement unit, the ground attitude angle of the mobile robot in planar motion when the robot is in a pothole in a work plane or when the robot encounters a doorsill can be estimated more accurately, and the positional posture of the mobile robot can be corrected.

In a first aspect, an embodiment of the present application provides a posture estimation method for a mobile robot. The method includes:

obtaining a three-dimensional point cloud of an environment when the mobile robot performs a planar task, and determining a work plane point cloud based on the three-dimensional point cloud of the environment and a predetermined height threshold;
obtaining inertial measurement information of the mobile robot; and
determining a posture of the mobile robot in a world coordinate system based on the inertial measurement information and the work plane point cloud.

Optionally, in the above method, the mobile robot is equipped with a linear laser module, the linear laser module emits at least two linear lasers, and projection points of the at least two linear lasers on the work plane are not in the same straight line; and
obtaining the three-dimensional point cloud of the environment when the mobile robot performs a planar task includes:

obtaining, by means of light rays emitted by the laser module, a raw point cloud of a center of a laser line in a pixel coordinate system when the mobile robot performs a planar task;
establishing a first constraint based on mapping from a camera coordinate system to the pixel coordinate system according to the raw point cloud of the center of the laser line;
establishing a second constraint based on a linear laser light plane equation in the camera coordinate system; and
determining, jointly with the first constraint and the second constraint, the three-dimensional point cloud of the environment.

Optionally, in the above method, determining the point cloud of the work plane based on the three-dimensional point cloud of the environment and the predetermined height threshold includes:

determining whether a height value of each point cloud in the three-dimensional point cloud of the environment is less than the height threshold; if yes, determining that the corresponding point cloud belongs to the work plane of the mobile robot; and

determining whether the number of point clouds belonging to the work plane is greater than or equal to a predetermined number threshold; if yes, taking the point cloud belonging to the work plane of the mobile robot as the work plane point cloud.

Optionally, in the above method, determining the posture of the mobile robot in the world coordinate system based on the inertial measurement information and the work plane point cloud includes:

constructing a first error term of a posture estimation model according to the inertial measurement information, the first error term being determined according to a roll angle error term and a pitch angle error term;

constructing a second error term of the posture estimation model according to a coplanar condition of the work plane point cloud, the second error term being determined according to a distance from each point cloud falling in the work plane to the work plane;

constructing a least squares optimization model based on the first error term and the second error term, as the posture estimation model; and

solving the posture estimation model to obtain a roll angle estimation value and a pitch angle estimation value of the mobile robot in the world coordinate system.

Optionally, in the above method, constructing the second error term of the posture estimation model according to the coplanar condition of the work plane point cloud includes:

determining a normal vector value of a work plane normal vector in a robot coordinate system by taking the roll angle estimation value and the pitch angle estimation value as variables;

determining a work-plane plane equation of the work plane in the robot coordinate system, and a plurality of coefficient values in the work-plane plane equation according to the normal vector value;

determining a distance value from each point cloud in the work plane point clouds to the work plane according to the work-plane plane equation and the plurality of coefficient values; and

determining the second error term according to the distance value from each point cloud to the work plane.

Optionally, in the above method, the three-dimensional point cloud of the environment includes an obstacle point cloud; and the method further includes:

correcting the obstacle point cloud according to the determined posture of the mobile robot in the world coordinate system to obtain three-dimensional coordinates of the obstacle point cloud in the world coordinate system.

Optionally, in the above method, correcting the obstacle point cloud according to the determined posture of the mobile robot in the world coordinate system includes:

determining a first transformation matrix from a camera coordinate system to a robot coordinate system;

determining first coordinates of a specified axis of the robot coordinate system in the world coordinate system according to the posture of the mobile robot in the world coordinate system;

determining a second transformation matrix from the robot coordinate system to the world coordinate system according to the first coordinates and unit coordinates of a specified axis of the world coordinate system; and

determining second coordinates of the obstacle point cloud in the world coordinate system according to the obstacle point cloud in the camera coordinate system, the first transformation matrix and the second transformation matrix.

In a second aspect, an embodiment of the present application further provides a posture estimation apparatus for a mobile robot. The apparatus includes:

a first obtaining unit, configured to obtain a three-dimensional point cloud of an environment when the mobile robot performs a planar task, and determine a work plane point cloud based on the three-dimensional point cloud of the environment and a predetermined height threshold;

a second obtaining unit, configured to obtain inertial measurement information of the mobile robot; and

a posture estimation unit, configured to determine a posture of the mobile robot in a world coordinate system based on the inertial measurement information and the work plane point cloud.

In a third aspect, an embodiment of the present application further provides a mobile robot, including a processor; and a memory configured to store executable instructions for the processor, wherein the processor is configured to perform any of the above methods via the executable instructions.

In a fourth aspect, an embodiment of the present application further provides a computer-readable storage medium storing a computer program thereon, wherein the computer program, when executed by the processor, is configured to implement any of the above methods. The methods adopted in the embodiments of the present application can achieve at least the following beneficial effects.

In the present application, when the mobile robot performs a planar task, the three-dimensional point cloud of the environment where the mobile robot is located and inertial measurement data are obtained, and the three-dimensional point cloud of the environment is filtered according to the predetermined height threshold, to obtain the work plane point cloud in the work plane; and then, the posture of the mobile robot in the world coordinate system is determined by combining the work plane point cloud and the inertial measurement information. In the present application, when the posture of the mobile robot is detected, the three-dimensional point cloud data of the environment is added to detect the posture of the mobile robot jointly with the work plane point cloud and the inertial measurement information, such that the ground attitude angle of the robot can be estimated more accurately, especially in a scenario when the robot is in a pothole in the work plane or encounters a doorsill; and the present application involves a simple algorithm, low computing power requirements and strong practicability.

**BRIEF DESCRIPTION OF THE DRAWINGS**

The drawings described herein are intended to provide further understanding of the present application, and constitute a part of the present application. The exemplary embodiments of the present application and descriptions thereof are used to explain the present application, and do not constitute inappropriate limitations to the present application. In the drawings,

FIG. 1 shows a schematic flowchart of a posture estimation method for a mobile robot according to an embodiment of the present application.;

FIG. 2-a shows a schematic diagram of a mounting mode of a linear laser module on a mobile robot according to an embodiment of the present application;

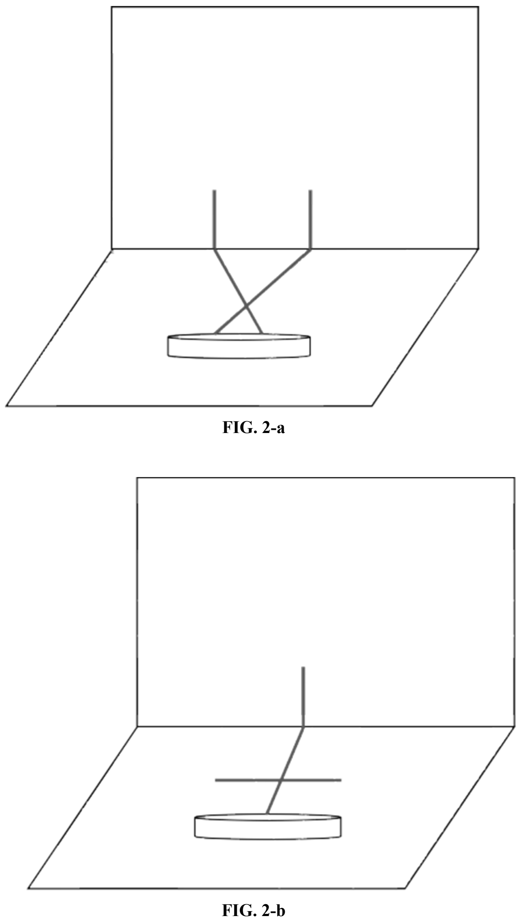

FIG. 2-b shows a schematic diagram of a mounting mode of a linear laser module on a mobile robot according to an embodiment of the present application;

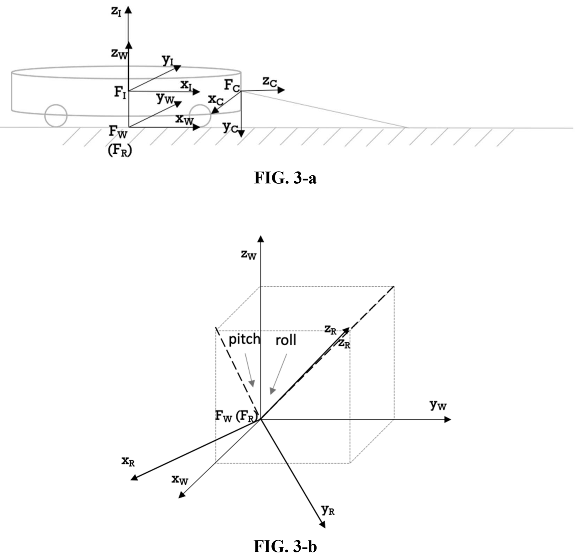

FIG. 3-a shows a schematic diagram of a world coordinate system appointed in an arrangement mode of the linear laser module in FIG. 2-a or FIG. 2-b;

FIG. 3-b shows a schematic diagram of a robot coordinate system appointed in an arrangement mode of the linear laser module in FIG. 2-a or FIG. 2-b;

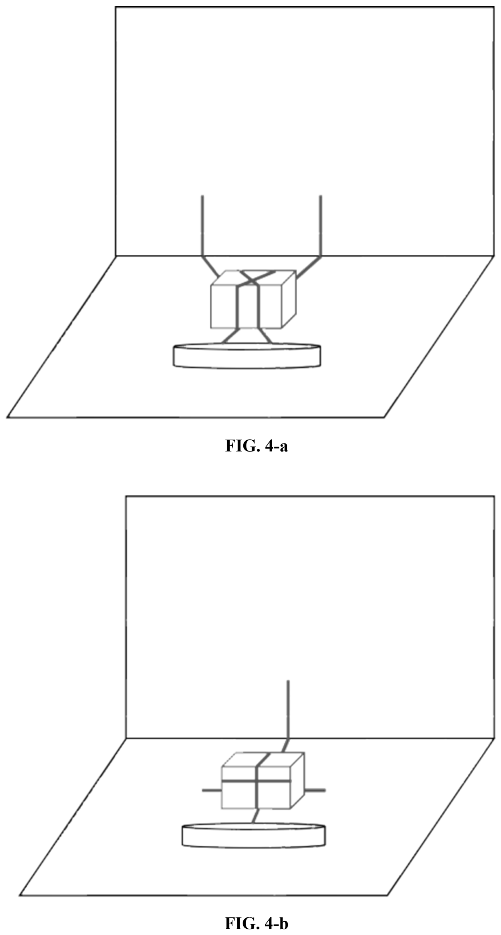

FIG. 4-a shows a scenario where large obstacles are present in a work plane of a mobile robot according to an embodiment of the present application;

FIG. 4-b shows a scenario where large obstacles are present in a work plane of a mobile robot according to another embodiment of the present application;

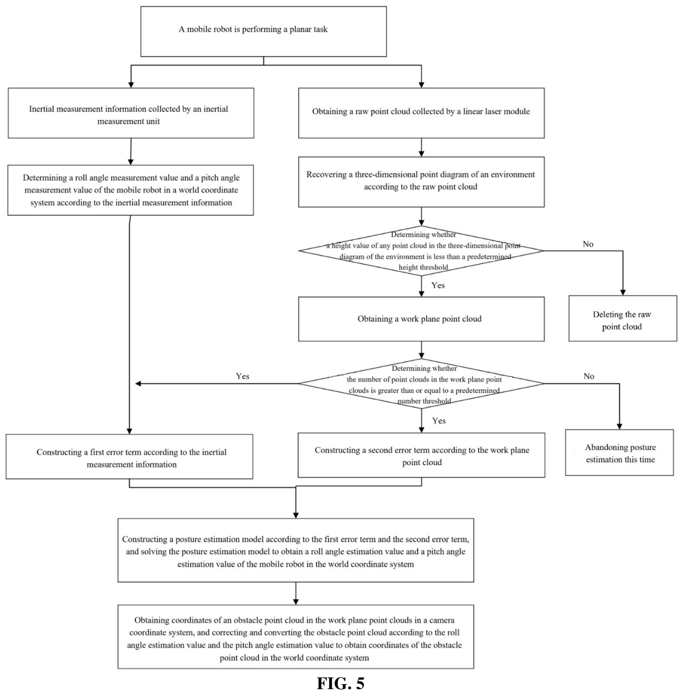

FIG. 5 shows a schematic flowchart of a posture estimation method for a mobile robot according to another embodiment of the present application;

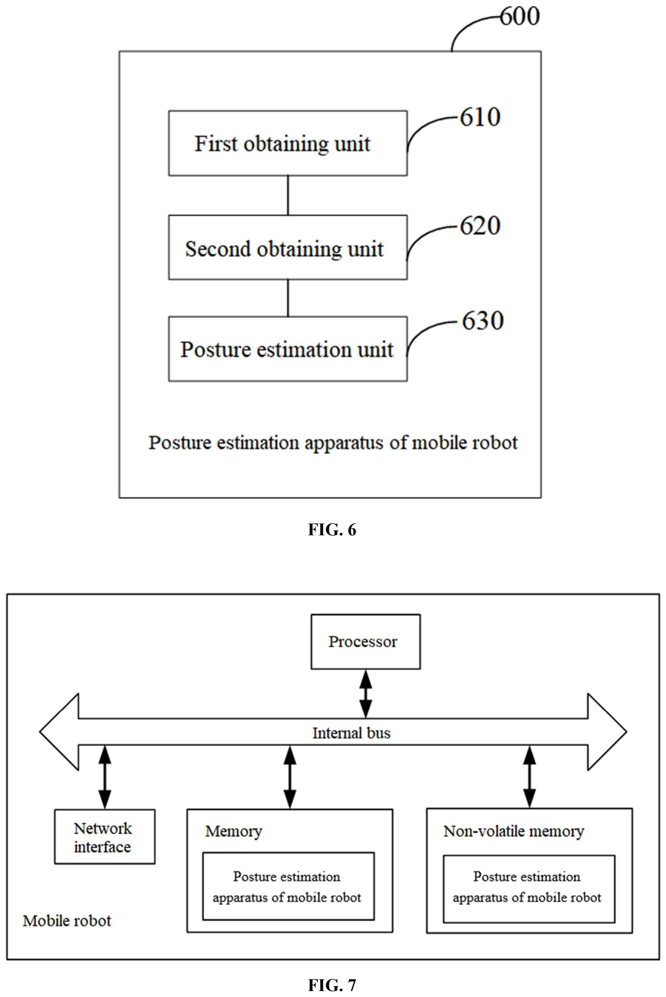

FIG. 6 shows a schematic structural diagram of a posture estimation apparatus for a mobile robot according to an embodiment of the present application; and

FIG. 7 is a schematic structural diagram of a mobile robot according to an embodiment of the present application.

**DETAILED DESCRIPTION**

To make the objectives, technical solutions and advantages of the embodiments of the present application clearer, the technical solutions in the embodiments of the present application will be described clearly and fully below with reference to the accompanying drawings in the embodiments of the present application. Apparently, the described embodiments are merely a part of embodiments of the present application, not all embodiments of the present application. All other embodiments achieved by those of ordinary skills in the art based on the embodiments of the present application without creative work shall fall within the protection scope of the present application.

The following is a detailed description of the technical solutions provided by the embodiments of the present application in conjunction with the accompanying drawings.

In the prior art, the attitude detection method for a robot performing a planar task is usually performed by calculating the attitude with the angle value measured by an inertial measurement unit, but this method has a relatively large error, making it difficult to obtain an accurate attitude of the robot in the work plane.

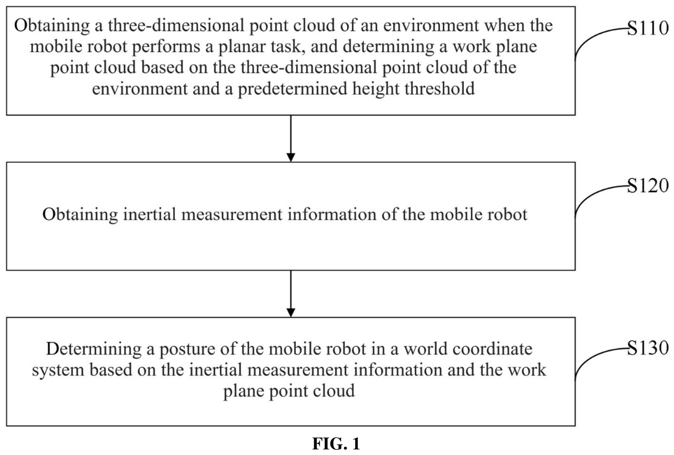

To this end, the present application provides a posture estimation method for a mobile robot. FIG. 1 shows the schematic flowchart of a posture estimation method for a mobile robot according to an embodiment of the present application. As shown by FIG. 1, it can be seen that the posture estimation method for a mobile robot of the present application at least includes steps S110 to S130.

In step S110, a three-dimensional point cloud of an environment when the mobile robot performs a planar task is obtained, and a work plane point cloud is determined based on the three-dimensional point cloud of the environment and a predetermined height threshold.

The present application is mainly applicable to a scenario where the mobile robot performs a task in a plane, particularly a scenario where the robot in planar motion, e.g., a sweeping robot, performs a task.

When the mobile robot performs a planar task, the three-dimensional point cloud of the environment where the mobile robot is located is obtained. The three-dimensional point cloud of the environment may be obtained by adopting various forms of lidars or cameras, or the like. Specifically, the lidar or camera may be mounted with a specific posture at a designated position of the mobile robot, such that the three-dimensional point cloud of the environment around the mobile robot may be obtained when the mobile robot performs the planar task.

In some embodiments of the present application, from the perspectives of economy and effects, a linear laser sensor is selected to obtain the three-dimensional point cloud of the environment. Specifically, a linear laser module is mounted on the mobile robot, and the linear laser module may be mounted on the mobile robot in many ways. FIG. 2-a shows a schematic diagram of a mounting mode of a linear laser module on a mobile robot according to an embodiment of the present application, and FIG. 2-b shows a schematic diagram of a mounting mode of a linear laser module on a mobile robot according to an embodiment of the present application. As shown by FIG. 2-a and FIG. 2-b, it can be seen that the mounting modes of the linear laser module on the mobile robot include but are not limited to a forward-crossing combination of two linear lasers perpendicular to each other (FIG. 2-a) and a cross combination of a horizontal linear laser and a vertical linear laser(FIG. 2-b), and the like. To perform planar fitting through a linear laser point cloud, linear laser points falling in the work plane may not all fall in the same straight line, and any mounting mode of the linear laser module satisfying this condition may be applied. The modes shown by FIG. 2-a and FIG. 2-b are only exemplary descriptions, and do not constitute any limitations to the present application. It is to be noted that, the planar fitting cannot be performed with the three-dimensional point cloud of the environment recovered in a case of adopting a projection mode of a single horizontal linear laser.

Hereinafter, arrangement modes of the linear laser module shown by FIG. 2-a and FIG. 2-b will be described as an example, and calculation methods thereof are the same.

Firstly, the appointment of coordinate systems in the present application is described. FIG. 3-a shows a schematic diagram of a world coordinate system appointed in an arrangement mode of the linear laser module in FIG. 2-a or FIG. 2-b, and FIG. 3-b shows a schematic diagram of a robot coordinate system appointed in an arrangement mode of the linear laser module in FIG. 2-a or FIG. 2-b. Referring to FIG. 3-b, when the mobile robot tilts, a roll angle and a pitch angle of the attitude angle of the mobile robot are shown by FIG. 3-b, respectively.

When a linear laser emitted by the linear laser module is projected onto the work plane, information of the three-dimensional point cloud of the environment in the work plane in the camera coordinate system may be recovered. Specifically, a raw point cloud of the center of the laser line in a pixel coordinate system when the mobile robot performs the planar task is obtained by means of light rays emitted by the laser module; a first constraint is established based on mapping from the camera coordinate system to the pixel coordinate system according to the raw point cloud of the center of the laser line; a second constraint is established based on a linear laser light plane equation in the camera coordinate system; and the three-dimensional point cloud of the environment is determined jointly with the first constraint and the second constraint.

When the mobile robot performs the planar task, the linear laser module scans the environment to obtain the raw point cloud $p=(u, v)$ of the center of the laser line in the pixel coordinate system, and environmental point cloud coordinates $P_C=(x, y, z)$ of the raw point cloud $p=(u, v)$ in the camera coordinate system may be recovered. Specifically, according to the mapping K (as shown by Equation 1) from the camera coordinate system to the pixel coordinate system, the first constraint as shown by Equation 2 may be established.

$$K=\begin{bmatrix} f_x & 0 & u_0 \\ 0 & f_y & v_0 \\ 0 & 0 & 1 \end{bmatrix} \quad \text{Equation (1)}$$

$$\begin{cases} \dfrac{(u - u_0)}{f_x} = \dfrac{x}{z} \\ \dfrac{(v - v_0)}{f_y} = \dfrac{y}{z} \end{cases}$$

Equation (2)

In the Equations, f represents the mapping function from the camera coordinate system to the pixel coordinate system, and $u_0$ and $v_0$ each represents any raw point cloud.

Further, points from a linear laser light plane definitely fall in the linear laser light plane, and therefore, the second constraint as shown by Equation 3 may be established according to the linear laser light plane equation in the camera coordinate system.

$$A_{laser}X + B_{laser}Y + C_{laser}Z + D_{laser} = 0$$

Equation (3)

In the Equation, $A_{laser}$, $B_{laser}$, $C_{laser}$ and $D_{laser}$ represent coefficients of the linear laser light plane equation.

Finally, the three-dimensional point cloud of the environment may be solved jointly with the first constraint and the second constraint. The three-dimensional point cloud of the environment includes three-dimensional coordinates (X, Y, Z) of a plurality of point clouds, as shown by the following Equation 4.

$$\begin{cases} Z = \dfrac{-D_{laser}}{A_{laser}\dfrac{(u-u_0)}{f_x} + B_{laser}\dfrac{(v-v_0)}{f_y} + C_{laser}} \\ X = \dfrac{(u-u_0)}{f_x} \cdot Z = \dfrac{(u-u_0)}{f_x} \cdot \dfrac{-D_{laser}}{A_{laser}\dfrac{(u-u_0)}{f_x} + B_{laser}\dfrac{(v-v_0)}{f_y} + C_{laser}} \\ Y = \dfrac{(v-v_0)}{f_y} \cdot Z = \dfrac{(v-v_0)}{f_y} \cdot \dfrac{-D_{laser}}{A_{laser}\dfrac{(u-u_0)}{f_x} + B_{laser}\dfrac{(v-v_0)}{f_y} + C_{laser}} \end{cases}$$

Equation 4

For the recovered three-dimensional point cloud of the environment in the work plane, obstacle points in the work plane may be filtered out through a loose height threshold. When no large or many obstacles are present in the work plane, that is, the number of point clouds belonging to the work plane exceeds a certain threshold, the work plane attitude angle of the robot may be estimated and solved; otherwise, the estimation of the work plane attitude angle of the robot is abandoned. Specifically, the work plane point cloud is determined based on the three-dimensional point cloud of the environment and the predetermined height threshold. More specifically, a height value of each point cloud in the three-dimensional point cloud of the environment is compared with the predetermined height threshold; if the height value of a point cloud is less than the height threshold, it is determined that the point cloud belongs to the work plane of the mobile robot; and if the height value of a point cloud is greater than or equal to the height threshold, the point cloud is filtered out, that is, it is determined that the point cloud does not belong to the work plane. Further, the number of point clouds belonging to the work plane is counted to obtain a count value. If the count value is greater than or equal to a predetermined number threshold, it indicates that the number of point clouds falling in the work plane of the mobile robot is sufficient, and all point clouds falling in the work plane are taken as the work plane point clouds.

In addition, on the premise that large or many obstacles are present in the work plane, since the number of point clouds falling in the work plane is relatively small, it is of slight significance to estimate the posture of the mobile robot. Therefore, if the count value is less than the predetermined number threshold, it indicates that the number of point clouds falling in the work plane of the mobile robot is relatively small, and the recovered three-dimensional point cloud of the environment in the work plane is abandoned, that is, the posture estimation for the mobile robot performed this time is abandoned.

Referring to FIG. 4-a and FIG. 4-b, FIG. 4-a shows a scenario where large obstacles are present in a work plane of a mobile robot according to an embodiment of the present application, and FIG. 4-b shows a scenario where large obstacles are present in a work plane of a mobile robot according to another embodiment of the present application. As shown by FIG. 4-a and FIG. 4-b, when an obstacle with large volume is in front of the mobile robot, most of point clouds exceed the height threshold of the work plane, and the number of point clouds falling in the work plane is insufficient to accurately estimate the work plane, such that the posture estimation for the mobile robot at this time is abandoned.

In step S120, inertial measurement information of the mobile robot is obtained.

The inertial measurement information of the mobile robot may be obtained by an inertial measurement unit (IMU) mounted on the mobile robot. The inertial measurement information mainly includes a roll angle measurement value $roll_{meas}$ and a pitch angle measurement value $pitch_{meas}$ of the mobile robot in the world coordinate system. However, based on the roll angle measurement value $roll_{meas}$ and the pitch angle measurement value $pitch_{meas}$ which are measured by the IMU, when the work plane is uneven, for example, when there is a pothole in the work plane, the attitude angle measured by the IMU may have a relatively large error.

In step S130, the posture of the mobile robot in the world coordinate system is determined according to the inertial measurement information and the work plane point cloud.

Finally, the posture of the mobile robot in the world coordinate system is determined by combining the inertial measurement information and the work plane point cloud. The overall conception for posture estimation includes: taking error terms of the roll angle measurement value and the pitch angle measurement value which are measured by the IMU as one constraint condition, and taking a coplanar condition of the work plane point cloud obtained by a linear laser point cloud recovery module as another constraint condition, to obtain the roll angle estimation value and the pitch angle estimation value of the mobile robot coordinate system relative to the world coordinate system through solving with the least squares joint optimization, and to take the obtained roll angle estimation value and pitch angle estimation value as the posture of the mobile robot in the world coordinate system.

Specifically, a first error term of a posture estimation model is constructed according to the inertial measurement information, wherein the first error term is the one constraint condition described above, and the first error term includes a roll angle error term and a pitch angle error term; a second error term of the posture estimation model of the mobile robot is constructed according to the coplanar condition of the work plane point cloud, wherein the second error term is the another constraint condition described above, and the second error term includes a distance from the point cloud falling in the work plane to the work plane; a least squares optimization model is constructed based on the first error term and the second error term, as the posture estimation model; and the posture estimation model is solved to obtain the roll angle estimation value and the pitch angle estimation value of the mobile robot in the world coordinate system.

In the present application, the roll angle estimation value $roll_{opt}$ and the pitch angle estimation value $pitch_{opt}$ are taken as independent variables to establish the least squares optimization model. The roll angle estimation value $roll_{opt}$ and the pitch angle estimation value $pitch_{opt}$ are objectives to be solved in the present application. In some embodiments of the present application, the least squares optimization model is shown by Equation 5:

$$\min_{x} \frac{1}{2} \|f(x)\|^2 = \min_{x} \frac{1}{2} \left( \|f_{imu}(x)\|^2 + \sum_{i}^{N} \|f_{plane,i}(x)\|^2 \right)$$

$$= \min_{x} \frac{1}{2} \left( f_{imu}^T(x) f_{imu}(x) + \sum_{i}^{N} f_{plane,i}^T(x) f_{plane,i}(x) \right) \text{, wherein}$$

$$X = [roll_{opt}, pitch_{opt}]^T \in R^2 \quad \text{Equation (5).}$$

As shown by Equation 5, it can be seen that the least squares optimization model $\min_{x} \frac{1}{2}\|f(x)\|^2$ includes two error terms, which are denoted as a first error term and a second error term, respectively. The first error term $f_{imu}(x)$ involves the roll angle error term and the pitch angle error term, and the second error term $f_{plane,i}(x)$ involves the distance from the point cloud falling in the work plane to the work plane.

The first error term $f_{imu}(x)$ may be determined by subtracting the roll angle estimation value $roll_{opt}$ and the pitch angle estimation value $pitch_{opt}$ from the roll angle measurement value $roll_{meas}$ and the pitch angle measurement value $pitch_{meas}$ which are obtained by the IMU, respectively. Specifically, the first error term $f_{imu}(x)$ is shown by Equation (6).

$$f_{imu}(x) = [roll_{meas} - roll_{opt}, ptich_{meas} - pitch_{opt}]^T \quad \text{Equation (6)}$$

The second error term $f_{plane,i}(x)$ may be determined according to the distance from each point cloud falling in the work plane to the work plane. During calculation, the second error term of the posture estimation model may be constructed according to the coplanar condition of the work plane point cloud, which specifically includes: determining a normal vector value of a work plane normal vector in a robot coordinate system by taking the roll angle estimation value and the pitch angle estimation value as variables; determining a work-plane plane equation of the work plane in the robot coordinate system, and a plurality of coefficient values in the work-plane plane equation according to the normal vector value; determining a distance value from each point cloud in the work plane point clouds to the work plane according to the work-plane plane equation and the plurality of coefficient values; and finally, determining the second error term according to the distance value from each point cloud to the work plane.

Specifically, by taking the obtained coplanar condition of work plane points as one of the constraint conditions, the normal vector value $\vec{n}$ of the work plane (e.g., a ground plane) normal vector $\vec{n}$ in the robot coordinate system may be obtained through the roll angle estimation value $roll_{opt}$ and the pitch angle estimation value $pitch_{opt}$, as shown by Equation 7.

$$\vec{n} = \left[\sin\left(-pitch_{opt}\right), \tan\left(-roll_{opt}\right)\cos\left(-pitch_{opt}\right), \cos\left(-pitch_{opt}\right)\right]^T$$

Equation (7)

In this way, the work-plane plane equation of the work plane in the robot coordinate system is Equation 8.

$$A \cdot x + B \cdot y + C \cdot z + D = 0$$

Equation (8)

In the Equation 8, A, B, C and D represent coefficients of the work-plane plane equation.

By solving the Equation 8, the coefficients A, B and C shown by Equation (9) of the work-plane plane equation may be obtained.

$$\begin{cases} A = \sin\left(-pitch_{opt}\right) \\ B = \tan\left(-roll_{opt}\right)\cos\left(-pitch_{opt}\right) \\ C = \cos\left(-pitch_{opt}\right) \end{cases}$$

Equation (9)

Further, when the robot is in the work plane, the origin point $p_r = [x_r, y_r, z_r]^T = [0,0,0]^T$ of the robot coordinate system also falls in the work plane, thereby obtaining the coefficient D shown by Equation (10) of the work-plane plane equation.

$$D = A \cdot x_r - B \cdot y_r - C \cdot z_r = -\sin\left(-pitch_{opt}\right) \cdot x_r - \tan\left(-roll_{opt}\right)\cos\left(-pitch_{opt}\right) \cdot y_r - \cos\left(-pitch_{opt}\right) \cdot z_r$$

Equation (10)

For each point cloud $p_i = [x_i, y_i, z_i]^T$, $i \in \{1,...,N\}$ in the work plane point clouds, the distance value $f_{plane,i}$ from the point cloud to the work plane is shown by Equation 11, and the distance value is taken as the second error term.

$$f_{plane,i} = \frac{|A \cdot x_i + B \cdot y_i + C \cdot z_i + D|}{\sqrt{A^2 + B^2 + C^2}}$$

Equation (11)

The constructed least squares optimization model is taken as the posture estimation model of the mobile robot, and then $\min_x \frac{1}{2}\|f(x)\|^2$ is minimized, thereby obtaining the roll angle estimation value $roll_{opt}$ and the pitch angle estimation value $pitch_{opt}$ of the mobile robot in the world coordinate system.

In the present application, it can be seen from the method shown by FIG. 1 that, when the mobile robot performs a planar task, the three-dimensional point cloud of the environment where the mobile robot is located and inertial measurement data are obtained, and the three-dimensional point cloud of the environment is filtered according to the predetermined height threshold, to obtain the work plane point cloud in the work plane; and then, the posture of the mobile robot in the world coordinate system is determined by combining the work plane point cloud and the inertial measurement information. In the present application, when the posture of the mobile robot is detected, the three-dimensional point cloud data of the environment is added to detect the posture of the mobile robot jointly with the work plane point cloud and the inertial measurement information, such that the ground attitude angle of the robot can be estimated more accurately, especially in a scenario where the robot is in a pothole in the work plane or encounters a doorsill; and the present application involves a simple algorithm, low computing power requirements and strong practicability.

In some embodiments of the present application, in the above method, the three-dimensional point cloud of the environment includes an obstacle point cloud; and the method further includes: correcting the obstacle point cloud according to the determined posture of the mobile robot in the world coordinate system to obtain three-dimensional coordinates of the obstacle point cloud in the world coordinate system.

Further, after the accurate attitude angle of the mobile robot in the world coordinate system is solved, the obstacle point cloud previously detected by the linear laser module may be corrected to obtain the three-dimensional coordinates of the obstacle point cloud in the world coordinate system.

Specifically, in some embodiments of the present application, correcting the obstacle point cloud according to the determined posture of the mobile robot in the world coordinate system includes: determining a first transformation matrix from the camera coordinate system to the robot coordinate system and first coordinates of a specified axis of the robot coordinate system in the world coordinate system according to the posture of the mobile robot in the world coordinate system; determining a second transformation matrix from the robot coordinate system to the world coordinate system according to the first coordinates and unit coordinates of a specified axis of the world coordinate system; and determining second coordinates of the obstacle point cloud in the world coordinate system according to the obstacle point cloud in the camera coordinate system, the first transformation matrix and the second transformation matrix.

The overall conception for correcting the obstacle is conversion to the world coordinate system through the first transformation matrix and the second transformation matrix according to the obtained obstacle point cloud data in the camera coordinate system described above, wherein the first transformation matrix is a transformation matrix from the camera coordinate system to the robot coordinate system, and the second transformation matrix is a transformation matrix from the robot coordinate system to the world coordinate system.

Firstly, the first transformation matrix $T_{RC}$ from the camera coordinate system to the robot coordinate system is determined, and the first transformation matrix $T_{RC}$ may be shown by Equation 12.

$$\mathrm{T_{RC}} = \begin{bmatrix} R_{RC} & t_{RC} \\ 0 & 1 \end{bmatrix} \quad \text{Equation (12)}$$

Generally, the first transformation matrix $T_{RC}$ is known, or may be known by learning a hardware configuration of the mobile robot, wherein $R_{RC}$ and $t_{RC}$ are elements at corresponding positions of the first transformation matrix $T_{RC}$.

As described above, since the roll angle estimation value $roll_{opt}$ and the pitch angle estimation value $pitch_{opt}$ of the mobile robot in the world coordinate system are already obtained, the second transformation matrix from the robot coordinate system to the world coordinate system may be further obtained. Firstly, first coordinates $\vec{z_r}$ of the Z axis of the robot coordinate system in the world coordinate system are determined, as shown by Equation 13.

$$\vec{z_r} = \left[ \sin\left(pitch_{opt}\right), \tan\left(roll_{opt}\right)\cos\left(pitch_{opt}\right), \cos\left(pitch_{opt}\right)\right]^{T} \quad \text{Equation (13)}$$

A unit vector of the Z axis of the world coordinate system itself is $\vec{z_w} = [0,0,1]^{T}$. By cross-multiplying two vectors, i.e., the first coordinates $\vec{z_r}$ and the unit vector $\vec{z_w} = [0,0,1]^{T}$ of the Z axis of the world coordinate system itself, the second transformation matrix $T_{WR}$ from the robot coordinate system to the world coordinate system may be obtained, as shown by Equation (14).

$$T_{WR} = \begin{bmatrix} R_{WR} & t_{WR} \\ 0 & 1 \end{bmatrix} = \vec{z_w} * \vec{z_r} \quad \text{Equation (14)}$$

In the Equation 14, $R_{WR}$ and $t_{WR}$ are elements at corresponding positions of the first transformation matrix $T_{RC}$.

Finally, according to coordinates $P_C=(x, y, z)$ of the obstacle point cloud in the camera coordinate system, coordinates $P_W$ of the obstacle point cloud in the world coordinate system may be obtained by combining the first transformation matrix $T_{RC}$ from the camera coordinate system to the robot coordinate system and the second transformation matrix $T_{WR}$ from the robot coordinate system to the world coordinate system. The specific algorithm is shown by Equation 15.

$$P_W = T_{WR}T_{RC}P_C = \begin{bmatrix} R_{WR} & t_{WR} \\ 0 & 1 \end{bmatrix}\begin{bmatrix} R_{RC} & t_{RC} \\ 0 & 1 \end{bmatrix}(x, y, z)^T = (x_W, y_W, z_W) \qquad \text{Equation (15)}$$

The obstacle point cloud data obtained after correction is more accurate.

FIG. 5 shows a schematic flowchart of a posture estimation method for a mobile robot according to another embodiment of the present application. As shown by FIG. 5, this embodiment includes the following steps.

A raw point cloud collected by a linear laser module when the mobile robot performs planar motion, and inertial measurement information collected by an inertial measurement unit are obtained simultaneously.

A roll angle measurement value and a pitch angle measurement value of the mobile robot in a world coordinate system are determined according to the inertial measurement information.

A three-dimensional point diagram of an environment is recovered according to the raw point cloud.

Whether a height value of any point cloud in the three-dimensional point diagram of the environment is less than a predetermined height threshold is determined; if yes, it is determined that the point cloud belongs to the work plane of the mobile robot; otherwise, the point cloud is filtered out, that is, the point cloud is deleted. In this way, a work plane point cloud is obtained.

Whether the number of point clouds in the work plane point clouds is greater than or equal to a predetermined number threshold is determined; if not, the posture estimation task performed this time is abandoned; and if yes, a first error term is constructed according to the inertial measurement information, and a second error term is constructed according to the work plane point cloud.

A posture estimation model is constructed according to the first error term and the second error term, and the posture estimation model is solved to obtain a roll angle estimation value and a pitch angle estimation value of the mobile robot in the world coordinate system.

Coordinates of an obstacle point cloud in the work plane point clouds in a camera coordinate system are obtained, and the obstacle point cloud is corrected and converted according to the roll angle estimation value and the pitch angle estimation value to obtain coordinates of the obstacle point cloud in the world coordinate system.

FIG. 6 shows the schematic structural diagram of a posture estimation apparatus for a mobile robot according to an embodiment of the present application. As shown by FIG. 6, it can be seen that the posture estimation apparatus for a mobile robot of the present application includes:

a first obtaining unit 610 configured to obtain a three-dimensional point cloud of an environment when the mobile robot performs a planar task, and determine a work plane point cloud based on the three-dimensional point cloud of the environment and a predetermined height threshold;
a second obtaining unit 620 configured to obtain inertial measurement information of the mobile robot; and
a posture estimation unit 630 configured to determine a posture of the mobile robot in a world coordinate system based on the inertial measurement information and the work plane point cloud.

In some embodiments of the present application, in the above apparatus, the mobile robot is equipped with a linear laser module, the linear laser module emits at least two linear lasers, and projection points of the at least two linear lasers on the work plane are not in the same straight line. The first obtaining unit 610 is configured to: obtain, by means of light rays emitted by the laser module, a raw point cloud of the center of the laser line in a pixel coordinate system when the mobile robot performs a planar task; establish a first constraint based on mapping from the camera coordinate system to the pixel coordinate system according to the raw point cloud of the center of the laser line; establish a second constraint based on a linear laser light plane equation in the camera coordinate system; and determine, jointly with the first constraint and the second constraint, the three-dimensional point cloud of the environment.

In some embodiments of the present application, in the above apparatus, the first obtaining unit 610 is configured to: determine whether a height value of each point cloud in the three-dimensional point cloud of the environment is less than the height threshold, if yes, it is determined that the corresponding point cloud belongs to the work plane of the mobile robot; and determine whether the number of point clouds belonging to the work plane is greater than or equal to a predetermined number threshold, if yes, the point cloud belonging to the work plane of the mobile robot is taken as the work plane point cloud, otherwise, the three-dimensional point cloud of the environment is abandoned.

In some embodiments of the present application, in the above apparatus, the posture estimation unit 630 is configured to: construct a first error term of a posture estimation model according to the inertial measurement information, the first error term being determined according to a roll angle error term and a pitch angle error term; construct a second error term of the posture estimation model according to a coplanar condition of the work plane point cloud, the second error term being determined according to a distance from each point cloud falling in the work plane to the work plane; construct a least squares optimization model based on the first error term and the second error term, as the posture estimation model; and solve the posture estimation model to obtain a roll angle estimation value and a pitch angle estimation value of the mobile robot in the world coordinate system.

In some embodiments of the present application, in the above apparatus, the posture estimation unit 630 is configured to: determine a normal vector value of a work plane normal vector in a robot coordinate system by taking the roll angle estimation value and the pitch angle estimation value as variables; determine a work-plane plane equation of the work plane in the robot coordinate system, and a plurality of coefficient values in the work-plane plane equation according to the normal vector value; determine a distance value from each point cloud in the work plane point clouds to the work plane according to the work-plane plane equation and the plurality of coefficient values; and determine the second error term according to the distance value from each point cloud to the work plane.

In some embodiments of the present application, in the above apparatus, the three-dimensional point cloud of the environment includes an obstacle point cloud; and the posture estimation unit 630 is further configured to correct the obstacle point cloud according to the determined posture of the mobile robot in the world coordinate system to obtain three-dimensional coordinates of the obstacle point cloud in the world coordinate system.

In some embodiments of the present application, in the above apparatus, the posture estimation unit 630 is configured to: determine a first transformation matrix from the camera coordinate system to the robot coordinate system and first coordinates of a specified axis of the robot coordinate system in the world coordinate system according to the posture of the mobile robot in the world coordinate system; determine a second transformation matrix from the robot coordinate system to the world coordinate system according to the first coordinates and unit coordinates of a specified axis of the world coordinate system; and determine second coordinates of the obstacle point cloud in the world coordinate system according to the obstacle point cloud in the camera coordinate system, the first transformation matrix and the second transformation matrix.

It is to be noted that the aforementioned posture estimation apparatus for the mobile robot may implement the aforementioned posture estimation methods for the mobile robot one by one, which will not be repeated herein.

FIG. 7 is a schematic diagram of a structure of the mobile robot according to one embodiment of the present application. Referring to FIG. 7, at a hardware level, the mobile robot comprises a processor, and optionally also comprises an internal bus, a network interface and a storage. The storage may comprise a memory, such as a high-speed random-access memory (Random-Access Memory, RAM), or may also comprise a non-volatile memory (non-volatile memory), such as at least one disk memory, etc. Of course, the mobile robot may also include other hardware required for operations.

The processor, the network interface and the storage may be connected to each other via an internal bus, which may be an ISA (Industry Standard Architecture) bus, a PCI (Peripheral Component Interconnect) bus or an EISA (Extended Industry Standard Architecture) bus. The said buses can be classified as address buses, data buses, control buses, etc. For ease of representation, only one bi-directional arrow is shown in FIG. 7, but this does not mean that there is only one bus or one type of buses.

The storage is configured to store programs. Specifically, the program may comprise program codes, said program codes comprising computer-operating instructions. The storage may comprise a memory and a non-volatile memory and provides instructions and data to the processor.

The processor reads a corresponding computer program from the non-volatile memory into the memory and then runs it, forming a posture estimation apparatus for the mobile robot at a logical level. The processor executes the program stored in the memory and is specifically used to perform the aforementioned methods.

The aforementioned method performed by the posture estimation apparatus for the mobile robot as revealed by the embodiment shown in FIG. 6 of the present application may be applied in a processor or implemented by a processor. The processor may be an integrated circuit chip with signal processing capabilities. In the implementation process, the steps of the methods described above may be accomplished by integrated logic circuits of hardware in the processor or by instructions in the form of software. The above-described processor may be a general-purpose processor, including a central processing unit (Central Processing Unit, CPU), a network processor (Network Processor, NP), etc.; it may also be a digital signal processor (Digital Signal Processor, DSP), an application-specific integrated circuit (Application Specific Integrated Circuit, ASIC), a field-programmable gate array (Field-Programmable Gate Array, FPGA), or other programmable logic devices, discrete gates or transistor logic devices, or discrete hardware components. Various methods, steps and logic block diagrams disclosed in embodiments of the present application may be implemented or performed. The general-purpose processor may be a microprocessor or the processor may also be any conventional processor, etc. The steps of the methods disclosed in conjunction with embodiments of the present application may be directly embodied as being performed by a hardware-decoding processor or performed with a combination of hardware and software modules in the decoding processor. The software module may be located in a random memory, a flash memory, a read-only memory, a programmable read-only memory or an electrically erasable programmable memory, a register, or other storage media well established in the art. The storage medium is located in the storage, and the processor reads the configuration information in the storage and completes the steps of the methods described above in conjunction with its hardware.

The mobile robot may also perform the method performed by the posture estimation apparatus for the mobile robot in FIG. 6, and realize the function of the posture estimation apparatus for the mobile robot in the embodiment shown in FIG. 6. Embodiments of the present application will elaborate these details herein.

Embodiments of the present application also present a computer-readable storage medium storing one or more programs, the one or more programs comprising instructions which, when executed by a mobile robot comprising a plurality of applications, are capable of causing the mobile robot to perform a method performed by the posture estimation apparatus for the mobile robot in the embodiment shown in FIG. 6, and are specifically used for executing the foregoing methods.

Those skilled in the art should understand that the embodiments of the present application may be provided as a method, a system, or a computer program product. Therefore, the present application may adopt the form of a complete hardware embodiment, a complete software embodiment, or an embodiment combining software and hardware. Moreover, the present application may take the form of a computer program product implemented on one or more computer-usable storage media (including but not limited to a disk storage, a CD-ROM, an optical storage, etc.) containing computer-usable program codes.

The present application is described with reference to flowcharts and/or block diagrams of the methods, devices (systems), and computer program products according to embodiments of the present application. It should be understood that each process and/or block in the flowchart and/or block diagram, and a combination of processes and/or blocks in the flowchart and/or block diagram can be realized by computer program instructions. These computer program instructions may be provided to a processor of a general-purpose computer, a special-purpose computer, an embedded processor, or other programmable data processing devices to generate a machine, such that the instructions executed by the processor of the computer or other programmable data processing devices produce an apparatus that realizes the functions specified in one or more processes in the flowchart and/or one or more blocks in the block diagram.

These computer program instructions may also be stored in a computer-readable memory that may direct a computer or other programmable data processing devices to work in a specific manner, such that the instructions stored in the computer-readable memory produce an article of manufacture including the instruction apparatus which realizes the functions specified in one or more processes in the flowchart and/or one or more blocks in the block diagram.

These computer program instructions may also be loaded on a computer or other programmable data processing devices, such that a series of operating steps are executed on the computer or other programmable devices to produce computer-implemented processing, such that the instructions executed on the computer or other programmable devices provide steps for implementing functions specified in one or more processes in the flowchart and/or one or more blocks in the block diagram.

In a typical configuration, the computing device includes one or more processors (CPUs), an input/output interface, a network interface and a memory.

The memory may include a non-permanent memory, a random-access memory (RAM) and/or a non-volatile memory in computer-readable media, such as a read-only memory (ROM) or a flash memory (flash RAM). The memory is an example of a computer-readable medium.

Computer-readable media include permanent and non-permanent, removable and non-removable media, and configuration information storage can be realized by any method or technology. The configuration information may be computer-readable instructions, data structures, program modules, or other data. Examples of computer storage media include, but are not limited to, a phase change memory (PRAM), a static random-access memory (SRAM), a dynamic random-access memory (DRAM), other types of random-access memories (RAM), a read-only memory (ROM), an electrically erasable programmable read-only memory (EEPROM), a flash memory or other memory technology, a CD-ROM, a digital versatile disc (DVD) or other optical storages, magnetic cassettes, magnetic tape storages or other magnetic storage devices or any other non-transmission media which may be configured to store information that may be accessed by computing devices. According to the definition herein, computer-readable media do not include transitory computer-readable media (transitory media), such as modulated data signals and carrier waves.

It is understandable that the terms "include", "including" or any other variants thereof are intended to cover non-exclusive inclusion, such that a process, method, commodity or device including a series of elements not only includes those elements, but also includes other elements that are not explicitly listed, or elements inherent to the process, method, commodity, or devices. If there are no more restrictions, an element defined by a sentence "including a..." does not exclude the existence of other identical elements in the process, method, commodity, or devices that includes the element.

It should be appreciated by those skilled in the art that, the embodiments of the present application may be provided as methods, systems or computer program products. Therefore, the present application may adopt embodiments in forms of hardware only, software only, or a combination of software and hardware. Furthermore, the present application may adopt forms of computer program products executed on one or more computer usable storage media (including but not limited to a disk storage, a CD-ROM, an optical storage, etc.) containing computer-usable program codes.

Described above are merely optional embodiments of the present application, and are not intended to limit the present application. For those skilled in the art, this application is subject to various changes and variations. Within the spirit and principles of the disclosure, any modifications, equivalent substitutions, improvements and the like are within the protection scope of the claims of the present application.

**Claims**

1. A posture estimation method for a mobile robot, the method comprising:

   obtaining a three-dimensional point cloud of an environment when the mobile robot performs a planar task, and determining a work plane point cloud based on the three-dimensional point cloud of the environment and a predetermined height threshold;
   obtaining inertial measurement information of the mobile robot; and
   determining a posture of the mobile robot in a world coordinate system based on the inertial measurement information and the work plane point cloud.

2. The method according to claim 1, wherein the mobile robot is equipped with a linear laser module, the linear laser module emits at least two linear lasers, and projection points of the at least two linear lasers on the work plane are not in the same straight line; and
   obtaining the three-dimensional point cloud of the environment when the mobile robot performs a planar task comprises:

   obtaining, by means of light rays emitted by the laser module, a raw point cloud of a center of a laser line in a pixel coordinate system when the mobile robot performs a planar task;
   establishing a first constraint based on mapping from a camera coordinate system to the pixel coordinate system according to the raw point cloud of the center of the laser line;
   establishing a second constraint based on a linear laser light plane equation in the camera coordinate system; and
   determining, jointly with the first constraint and the second constraint, the three-dimensional point cloud of the environment.

3. The method according to claim 2, wherein determining the point cloud of the work plane based on the three-dimensional point cloud of the environment and the predetermined height threshold comprises:

   determining whether a height value of each point cloud in the three-dimensional point cloud of the environment is less than the height threshold; if yes, determining that the corresponding point cloud belongs to the work plane of the mobile robot; and
   determining whether the number of point clouds belonging to the work plane is greater than or equal to a predetermined number threshold; if yes, taking the point cloud belonging to the work plane of the mobile robot as the work plane point cloud.

4. The method according to claim 1, wherein determining the posture of the mobile robot in the world coordinate system based on the inertial measurement information and the work plane point cloud comprises:

   constructing a first error term of a posture estimation model according to the inertial measurement information, the first error term being determined according to a roll angle error term and a pitch angle error term;
   constructing a second error term of the posture estimation model according to a coplanar condition of the work plane point cloud, the second error term being determined according to a distance from each point cloud falling in the work plane to the work plane;
   constructing a least squares optimization model based on the first error term and the second error term, as the posture estimation model; and
   solving the posture estimation model to obtain a roll angle estimation value and a pitch angle estimation value of the mobile robot in the world coordinate system.

5. The method according to claim 4, wherein constructing the second error term of the posture estimation model according to the coplanar condition of the work plane point cloud comprises:

determining a normal vector value of a work plane normal vector in a robot coordinate system by taking the roll angle estimation value and the pitch angle estimation value as variables;

determining a work-plane plane equation of the work plane in the robot coordinate system, and a plurality of coefficient values in the work-plane plane equation according to the normal vector value;

determining a distance value from each point cloud in the work plane point clouds to the work plane according to the work-plane plane equation and the plurality of coefficient values; and

determining the second error term according to the distance value from each point cloud to the work plane.

6. The method according to claim 1, wherein the three-dimensional point cloud of the environment comprises an obstacle point cloud; and the method further comprises:
correcting the obstacle point cloud according to the determined posture of the mobile robot in the world coordinate system to obtain three-dimensional coordinates of the obstacle point cloud in the world coordinate system.

7. The method according to claim 6, wherein correcting the obstacle point cloud according to the determined posture of the mobile robot in the world coordinate system comprises:

determining a first transformation matrix from a camera coordinate system to a robot coordinate system;

determining first coordinates of a specified axis of the robot coordinate system in the world coordinate system according to the posture of the mobile robot in the world coordinate system;

determining a second transformation matrix from the robot coordinate system to the world coordinate system according to the first coordinates and unit coordinates of a specified axis of the world coordinate system; and determining second coordinates of the obstacle point cloud in the world coordinate system according to the obstacle point cloud in the camera coordinate system, the first transformation matrix and the second transformation matrix.

8. A posture estimation apparatus for a mobile robot, the apparatus comprising:

a first obtaining unit configured to obtain a three-dimensional point cloud of an environment when the mobile robot performs a planar task, and determine a work plane point cloud based on the three-dimensional point cloud of the environment and a predetermined height threshold;

a second obtaining unit configured to obtain inertial measurement information of the mobile robot; and

a posture estimation unit configured to determine a posture of the mobile robot in a world coordinate system based on the inertial measurement information and the work plane point cloud.

9. A mobile robot comprising:

a processor; and

a memory configured to store executable instructions for the processor,

wherein the processor is configured to perform the method according to any one of claims 1 to 7 by executing the executable instructions.

10. A computer-readable storage medium storing a computer program thereon, wherein when the computer program is executed by a processor, the method according to any one of claims 1 to 7 is implemented.

Obtaining a three-dimensional point cloud of an environment when the mobile robot performs a planar task, and determining a work plane point cloud based on the three-dimensional point cloud of the environment and a predetermined height threshold — S110

Obtaining inertial measurement information of the mobile robot — S120

Determining a posture of the mobile robot in a world coordinate system based on the inertial measurement information and the work plane point cloud — S130

**FIG. 1**

FIG. 2-a

FIG. 2-b

**FIG. 3-a**

**FIG. 3-b**

**FIG. 4-a**

**FIG. 4-b**

A mobile robot is performing a planar task

Inertial measurement information collected by an inertial measurement unit

Obtaining a raw point cloud collected by a linear laser module

Determining a roll angle measurement value and a pitch angle measurement value of the mobile robot in a world coordinate system according to the inertial measurement information

Recovering a three-dimensional point diagram of an environment according to the raw point cloud

Determining whether a height value of any point cloud in the three-dimensional point diagram of the environment is less than a predetermined height threshold

No

Yes

Obtaining a work plane point cloud

Deleting the raw point cloud

Determining whether the number of point clouds in the work plane point clouds is greater than or equal to a predetermined number threshold

Yes

No

Yes

Constructing a first error term according to the inertial measurement information

Constructing a second error term according to the work plane point cloud

Abandoning posture estimation this time

Constructing a posture estimation model according to the first error term and the second error term, and solving the posture estimation model to obtain a roll angle estimation value and a pitch angle estimation value of the mobile robot in the world coordinate system

Obtaining coordinates of an obstacle point cloud in the work plane point clouds in a camera coordinate system, and correcting and converting the obstacle point cloud according to the roll angle estimation value and the pitch angle estimation value to obtain coordinates of the obstacle point cloud in the world coordinate system

**FIG. 5**

**FIG. 6**

**FIG. 7**

## INTERNATIONAL SEARCH REPORT

| International application No. |
| --- |
| **PCT/CN2023/139720** |

### A. CLASSIFICATION OF SUBJECT MATTER

G01C 21/16(2006.01)i

According to International Patent Classification (IPC) or to both national classification and IPC

### B. FIELDS SEARCHED

Minimum documentation searched (classification system followed by classification symbols)

IPC: G01C 21

Documentation searched other than minimum documentation to the extent that such documents are included in the fields searched

Electronic data base consulted during the international search (name of data base and, where practicable, search terms used)

CNABS, CNTXT, WPABSC, ENTXTC, DWPI: 点云, 相机, 视觉, 地面, 平面, 阈值, 惯性, 惯导, 误差, 最小二乘, 姿态, 位姿, point cloud, ground, plane, threshold, INS, inertia, attitude, posture

### C. DOCUMENTS CONSIDERED TO BE RELEVANT

| Category* | Citation of document, with indication, where appropriate, of the relevant passages | Relevant to claim No. |
| --- | --- | --- |
| PX | CN 117007037 A (BEIJING STONE INNOVATION TECHNOLOGY CO., LTD.) 07 November 2023 (2023-11-07) claims 1-10, description, paragraphs 4-41, and figures 1-7 | 1-10 |
| X | CN 111684382 A (SZ DJI TECHNOLOGY CO., LTD.) 18 September 2020 (2020-09-18) description, paragraphs 39-101, 145, and 186-187 | 1-3, 6-10 |
| A | US 2022292711 A1 (BEIJING TUSEN ZHITU TECHNOLOGY CO., LTD.) 15 September 2022 (2022-09-15) entire document | 1-10 |
| A | CN 112396656 A (FUZHOU UNIVERSITY) 23 February 2021 (2021-02-23) entire document | 1-10 |
| A | CN 110375738 A (XIDIAN UNIVERSITY) 25 October 2019 (2019-10-25) entire document | 1-10 |
| A | CN 105045263 A (NANJIANG ROBOT CO., LTD.) 11 November 2015 (2015-11-11) entire document | 1-10 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 April 2024** | **07 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/139720** |

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | WO 2021249387 A1 (HANGZHOU HIKROBOT TECHNOLOGY CO., LTD.) 16 December 2021 (2021-12-16)<br>entire document | 1-10 |

Form PCT/ISA/210 (second sheet) (July 2022)

EP 4 644 838 A1

## INTERNATIONAL SEARCH REPORT
### Information on patent family members

International application No.

**PCT/CN2023/139720**

| Patent document cited in search report | | | Publication date (day/month/year) | Patent family member(s) | | | Publication date (day/month/year) |
|---|---|---|---|---|---|---|---|
| CN | 117007037 | A | 07 November 2023 | None | | | |
| CN | 111684382 | A | 18 September 2020 | None | | | |
| US | 2022292711 | A1 | 15 September 2022 | AU | 2022201558 | A1 | 29 September 2022 |
| | | | | EP | 4057227 | A1 | 14 September 2022 |
| | | | | JP | 2022140374 | A | 26 September 2022 |
| CN | 112396656 | A | 23 February 2021 | None | | | |
| CN | 110375738 | A | 25 October 2019 | None | | | |
| CN | 105045263 | A | 11 November 2015 | None | | | |
| WO | 2021249387 | A1 | 16 December 2021 | None | | | |

Form PCT/ISA/210 (patent family annex) (July 2022)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211724857